# EUROPEAN PATENT SPECIFICATION

(11) **EP 1 249 370 B1**
(45) Date of publication and mention of the grant of the patent: **13.10.2004**
(21) Application number: 02006232.9
(22) Date of filing: 20.03.2002
(51) Int. Cl.: B60R 16/02, H02G 3/00

(54) **Wire-guiding plaque for the electrical equipment of a motor vehicle**
Kabelführungsplatte für eine elektrische Einrichtung in einem Kraftfahrzeug
Plaque de guidage de câble pour l'équipement électrique d'un véhicule à moteur

(30) Priority: 11.04.2001 IT TO010351
(43) Date of publication of application: 16.10.2002
(73) Proprietor: FIAT AUTO S.p.A., 10135 Torino (IT)
(72) Inventor: Cusano, Goffredo, 80147 Napoli (IT)
(74) Representative: Di Francesco, Gianni

(56) References cited:
- DE-A- 19 959 429
- US-A- 5 588 260
- US-A- 5 639 993

## Description

The present invention relates to a wire-guiding plaque for the electrical equipment of a motor vehicle. More in particular, the term "wire-guiding plaque" indicates a peculiar kind of plug adapted to close a hole on the upright of the door, used to make the wires and the connector of the electrical equipment pass from the front of the bodywork to the door.

Presently the plaque is used only to make the bundle of wires pass through a slit made on it. The end of the bundle of wires provided with the connector is then either let hanging free inside the door, in economical versions, or connected to a support which fixed or made on the door inside the finishing panel, in more expensive versions.

Both solutions present the following drawbacks: in the first solution disturbing noises can be generated inside the passenger compartment due to the friction of the bundle of wires, or of the connection system, against the frame of the door or the finishing panel; in the second solution the additional components and the long assembly time cause higher costs. A plastic wire-guiding plaque according to the preamble of claim 1 is known from DE-A-19959429.

It is an object of the present invention to overcome the inconveniences described above by means of a plaque that closes the through hole for the bundle of wires and at the same time fixes it also providing a point of engagement for the connector.

Said object is achieved according to the invention by means of a plastic wire-guiding plaque, adapted to close the hole that lets the electrical wires of a motor vehicle pass from the front bodywork to the upright of the door, presenting the characteristics set forth in claim 1.

Additional characteristics and advantages will become more clear from the following description referring to the appended drawings provided as non-restrictive example and in which:

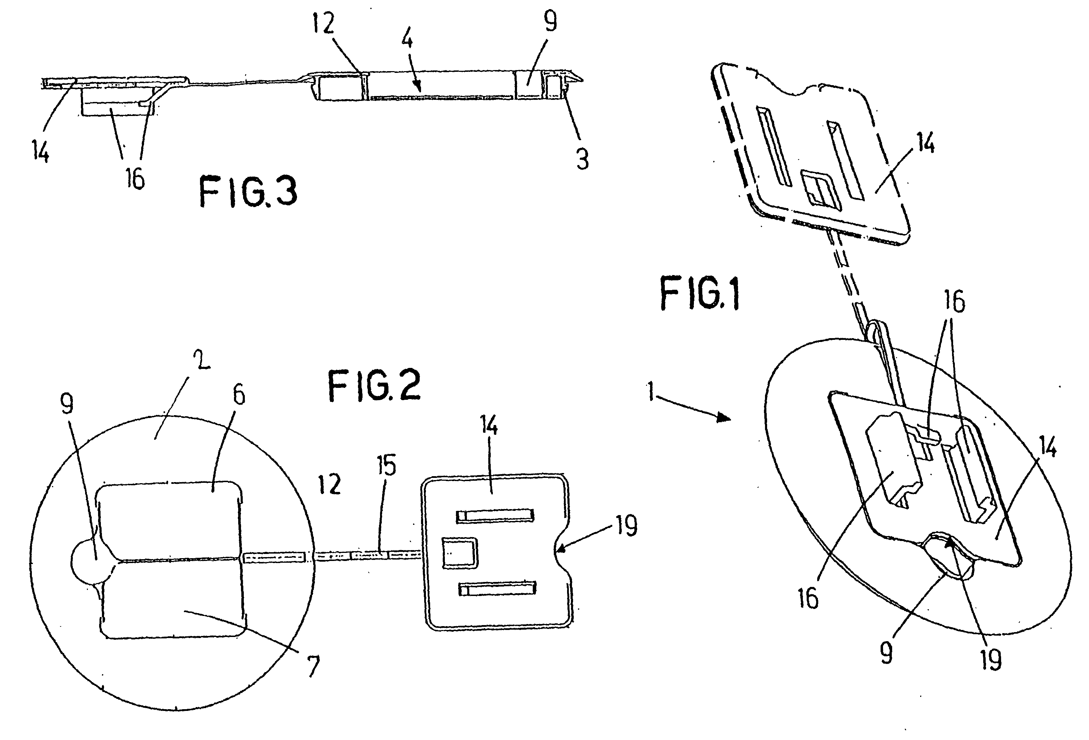

figure 1 is a perspective view of the plaque according to the invention, the open position of the plaque to engage the connector and fix bundle of wires being indicated by a broken line and the closed position of the plaque being indicated by a continuous line;
figure 2 is a rear plant view of the plaque in figure 1 with the plaque to engage the connector being in its open position;
figure 3 is a side section view of the plaque in figure 2;
figures 4 to 6 show the way the plaque is used, that is a first stage in which the bundle of wires of the electrical equipment is not inserted; a second stage in which the bundle of wires is inserted and the plaque to engage the connector is in its open position; a third stage in which the plaque to engage the connector is in its closed position, the bundle of wires is fixed and the connector is locked on the plaque.

With reference to the figures, reference number 1 indicates the plastic "wire-guiding plaque" for a motor-vehicle. In the case shown, the term wire-guiding plaque indicates a peculiar kind of plug adapted to close a hole on the upright of the door, used to make the wires and the connector of the electrical equipment pass from the front of the bodywork to the door.

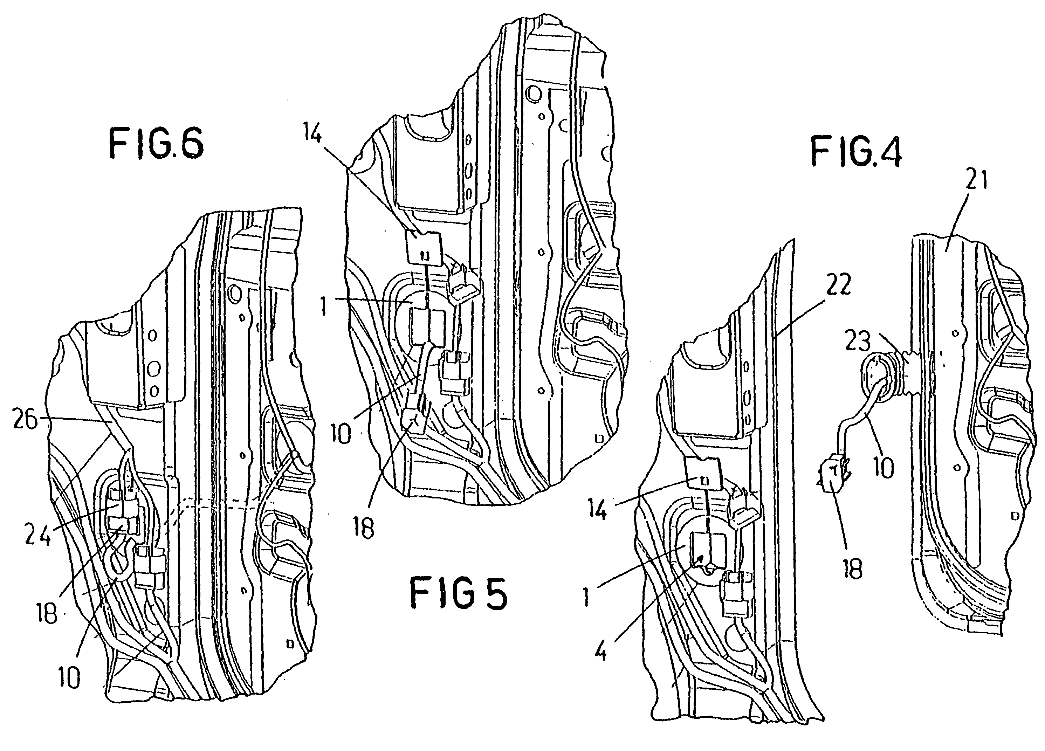

The plaque therefore presents a plug element 2 of cylindrical shape the thickness of which is reduced but enough to be snap inserted, by means of a peripheral tooth 3, into a hole made on the upright of the door. In the middle of the plaque there is a rectangular cavity 4, which is actually basically square and closed at its bottom by two basically rectangular wings 6 and 7, each one of these wings occupying half of the cavity 4 and being connected by one side, through a film hinge, to the body of the plaque 1, at the side of the cavity 4. On one of the sides of the cavity 4, at one end of the slit defined by the two facing wings, there is a basically cylindrical hole 9 which is perpendicular to the plug element 2 the diameter of which, being congruous to the dimension of the bundle of wires 10 which is to be placed inside it (fig.4), lays on the plane which is tangent to said side. Two sides of the upper edge of the cavity 4 are provided with a tooth 12 adapted to snap engage a plastic plate 14 connected to the plaque by means of a strap 15.

The plate 14 is provided with engagements 16 to snap connect the connector 18 of the bundle of wires 10 as well as with a semicircular recess 19 at the centre of the edge facing the hole 9 when the plate is snap inserted into the cavity 4. Its dimension is such that it slightly reduces the diameter of the hole 9 so that the bundle of wires 10 is pinched when inserted. The correct direction and side of insertion of the plate are given since the plate is connected to the plaque by the strap 15 so that it cannot be rotated.

The way the wire-guiding plaque is used is shown in figures 4 to 6 where part of the front bodywork 21 and part of the upright 22 of the front door are visible.

The bundle of wires 10 provided with a protection cap 23, protrudes from the bodywork 21 and is inserted into the door through the plaque 1 on the upright 22. The insertion of the bundle of wires 10, provided with the connector 18, is allowed by the wings 6 and 7 which move and rotate on their film hinges. Once the bundle of wires 10 has passed (fig. 5) it can be fixed by means of snap closing of the plate 14 on the plaque 1. It is therefore possible to insert the connector 18 into the snap engagements 16 of the plate 14 and to connect to it another connector 24 (fig. 6) from the part of electrical equipment already installed on the door.

In this way it is possible to easily and quickly fix both the bundle of wires and the connector inside the door, as well as to close the hole on the upright of the door which the bundle of wires passes through.

## Claims

1. Plastic wire-guiding plaque adapted to close a hole on an upright of a door of a motor vehicle, whereby the hole is used to make the wires and the connector of the electrical equipment pass from the front of the bodywork to the door, whereby the plaque consists of:
a plug element (2) which can be snap inserted into said hole and is provided with a rectangular cavity (4);
a plate (14) provided with engagements for one or more connectors of the electrical equipment of the motor vehicle, adapted to be snap inserted into said rectangular cavity (4), and **characterised in that** the plug element (2) is of basically cylindrical shape and is closed at its bottom by mobile wings (6, 7) and **in that** there is a flexible connection element between said plug element (2) and said plate (14).

2. Wire-guiding plaque as claimed in claim 1, **characterised in that** one of the sides of the rectangular cavity (4) is provided with a basically cylindrical hole (9) perpendicular to the element (2) and the diameter of which, being congruous to the dimension of the bundle of wires (10), lays on the plane which is tangent to said one side.

3. Wire-guiding plaque as claimed in claim 1 and 2, **characterised in that** one of the sides of the plate (14) presents a semicircular recess (19) the radius of which is shorter than the radius of said cylindrical hole (9).

4. Wire-guiding plaque as claimed in claim 1, **characterised in that** at least two of the sides of the cavity (4) present teeth (12) to snap engage the plate (14).

5. Wire-guiding plaque as claimed in claim 1, **characterised in that** the flexible connection element is a strap integral both to the plug element (2) and to the plate (14).

## Patentansprüche

1. Kabelführungsplatte aus Kunststoff, die zum Verschließen eines Lochs in einer Türsäule eines Kraftfahrzeuges angepasst ist, wobei das Loch dazu dient, die Kabel und den Elektrikanschluss von dem Karosserievorderteil zur Tür durchzuführen, wobei die Platte umfasst:
ein Steckelement (2), das in das Loch einschnappend eingefügt werden kann und das mit einem rechtwinkligen Hohlraum (4) versehen ist;
ein mit Halteelementen für ein oder mehrere Anschlussstücke der Kraftfahrzeugelektrik ausgestattetes Plattenelement (14), das dazu angepasst ist, in den rechtwinkligen Hohlraum (4) einzuschnappen, und
**dadurch gekennzeichnet, dass** das Steckelement (2) eine grundsätzlich zylindrische Form aufweist und am Boden durch bewegliche Flügel (6, 7) verschlossen ist, und dass ein flexibles Verbindungselement zwischen dem Steckelement (2) und dem Plattenelement (14) vorhanden ist.

2. Kabelführungsplatte nach Anspruch 1, **dadurch gekennzeichnet, dass** eine der Seiten des rechtwinkligen Hohlraums (4) mit einem zu dem Element (2) senkrechten, grundsätzlich zylindrischen Loch (9) versehen ist, dessen den Abmessungen des Kabelbündels (10) entsprechender Durchmesser auf der Ebene liegt, welche die eine Seite berührt.

3. Kabelführungsplatte nach Anspruch 1 und 2, **dadurch gekennzeichnet, dass** eine der Seiten des Plattenelementes (14) eine halbkreisförmige Einbuchtung (19) aufweist, deren Radius kürzer ist als der Radius des zylindrischen Lochs (9).

4. Kabelführungsplatte nach Anspruch 1, **dadurch gekennzeichnet, dass** zumindest zwei der Seiten des Hohlraums (4) Rastzungen (12) aufweisen, um mit der Platte (14) in Schnappeingriff zu gelangen.

5. Kabelführungsplatte nach Anspruch 1, **dadurch gekennzeichnet, dass** das flexible Verbindungselement ein sowohl mit dem Steckelement (2) als auch mit dem Plattenelement (14) einstückig ausgebildeter Streifen ist.

## Revendications

1. Plaque plastique de guidage de fils adaptée pour fermer un trou sur une partie verticale d'une porte de véhicule automobile, au moyen de laquelle les fils et le connecteur de l'équipement électrique passent de la partie avant de la carrosserie à la porte, dans laquelle la plaque est constituée de :
un élément de fiche (2) qui peut être inséré par encliquetage dans ledit trou et qui est muni d'une cavité rectangulaire (4) ;
une plaque (14) munie de moyens d'enclenchement pour un ou plusieurs connecteurs de l'équipement électrique du véhicule automobile, adaptés pour être insérés par encliquetage dans ladite cavité rectangulaire (4), et
**caractérisée en ce que** l'élément de fiche (2) est de forme générale cylindrique et est fermé à sa partie inférieure par des ailerons mobiles (6, 7), et **en ce qu'**il est prévu un élément de connexion souple entre ledit élément de fiche (2) et ladite plaque (14).

2. Plaque de guidage de fils selon la revendication 1, **caractérisée en ce que** l'un des côtés de la cavité rectangulaire (4) est muni d'un trou de forme générale cylindrique (9) perpendiculaire à l'élément (2), et dont le diamètre, qui est approprié au diamètre du faisceau de fils (10), se trouve dans le plan qui est tangent audit un des côtés.

3. Plaque de guidage de fils selon les revendications 1 et 2, **caractérisée en ce que** l'un des côtés de la plaque (14) présente un évidement semi-circulaire (19) dont le rayon est plus petit que le rayon dudit trou cylindrique (9).

4. Plaque de guidage de fils selon la revendication 1, **caractérisée en ce qu'**au moins deux des côtés de la cavité (4) présentent des dents (12) destinées à s'engager avec la plaque (14) par encliquetage.

5. Plaque de guidage de fils selon la revendication 1, **caractérisée en ce que** l'élément de connexion souple est une bande faisant partie intégrante à la fois de l'élément de fiche (2) et de la plaque (14).
